# EUROPEAN PATENT APPLICATION

(11) **EP 2 228 273 A2**
(43) Date of publication of application: **15.09.2010**
(21) Application number: 10001971.0
(22) Date of filing: 26.02.2010
(51) Int. Cl.: B60T 11/26, B60T 17/22

(54) **Reservoir tank and brake device using the reservoir tank**

(30) Priority: 11.03.2009 JP 2009058128
(71) Applicant: Bosch Corporation, Shibuya-ku Tokyo 150-8360 (JP)
(72) Inventor: Takahashi, Toshiyuki, Hiki-Gun 355-0813 Saitama-Ken (JP); Negishi, Emiko, Hiki-Gun 355-0813 Saitama-Ken (JP)
(74) Representative: Knapp, Thomas

(57) **Abstract**

A fluid quantity sensor (28) is disposed on a reservoir body comprising a lower body (8), a middle body (9) and an upper body (10) that have been welded together. The fluid quantity sensor (28) comprises a switch housing portion (29) that is integrally molded with the middle body (9) and a switch (30) that is attached to the switch housing portion (29). A switch attaching portion that attaches the switch (30) is formed in the switch housing portion (29). The fluid quantity sensor (28) is covered by a volume-augmented chamber forming portion (25) that is integrally molded in the middle body (9) and the upper body (10). A tool insertion hole (31) into which is inserted a tool that forms the switch attaching portion is disposed in this volume-augmented chamber forming portion (25).

## Description

### BACKGROUND

### Technical Field

The present invention relates to the technical field of a reservoir tank that stores hydraulic fluid and is used in a hydraulic pressure-actuated device such as a hydraulic brake device that utilizes hydraulic pressure such as oil pressure and to the technical field of a brake device equipped with the reservoir tank.

### Related Art

Conventionally, in vehicles such as automobiles, there are vehicles that employ a hydraulic brake device as a hydraulic pressure-actuated device that utilizes hydraulic pressure. In this hydraulic brake device, there is used a reservoir tank that stores hydraulic fluid supplied to a master cylinder that generates hydraulic pressure.

In order for the master cylinder to generate hydraulic pressure when hydraulic pressure is needed, it is necessary for a predetermined fluid quantity of the hydraulic fluid to be stored inside the reservoir tank. For this reason, usually a fluid quantity sensor is disposed in the reservoir tank, and when the fluid quantity inside the reservoir tank falls below the predetermined fluid quantity, this fluid quantity sensor detects this and causes a fluid quantity indicator to indicate this. Because of this indication by the fluid quantity indicator, the inside of the reservoir tank is replenished with the hydraulic fluid, and the fluid quantity inside the reservoir tank is ensured so as to be equal to or greater than the predetermined fluid quantity.

As a fluid quantity sensor in a conventional reservoir tank, there is known a fluid quantity sensor where a normally closed reed switch is installed on the upper surface of the reservoir tank and where a magnet is disposed on a float that moves up and down depending on the height of the fluid level of the hydraulic fluid inside the reservoir tank (e.g., see JP-T-2006-519728).

In the fluid quantity sensor described in JP-T-2006-519728, the float is guided by a guide hanging from the inner surface of the upper end of the reservoir tank and moves up and down. Additionally, when the fluid level of the hydraulic fluid inside the reservoir tank is higher than the fluid level required for warning indication (slightly higher than MIN), the float moves up, and the magnet moves closer to the reed switch and switches ON (closes) the reed switch with its magnetic force. Thus, warning indication is not performed. Further, when the fluid level of the hydraulic fluid inside the reservoir tank is low so as to be equal to or less than the fluid level required for warning indication, the float moves down, the magnet moves away from the reed switch such that its magnetic force no longer affects the reed switch, and the reed switch switches OFF (opens) on its own. Thus, warning indication is performed.

Further, as a fluid quantity sensor in a conventional reservoir tank, there is also known a fluid quantity sensor where a normally open reed switch is installed on the lower surface of the reservoir tank and where a magnet is disposed on a float that moves up and down depending on the height of the fluid level of the hydraulic fluid inside the reservoir tank (e.g., see JP-A-2004-74837).

In the fluid quantity sensor described in JP-A-2004-74837, the float moves up and down in the same manner as described above. However, in this fluid quantity sensor, when the fluid level of the hydraulic fluid inside the reservoir tank is higher than the fluid level required for warning indication, the float moves up, the magnet moves away from the reed switch such that its magnetic force no longer affects the reed switch, and the reed switch switches OFF (opens) on its own. Thus, warning indication is not performed. Further, when the fluid level of the hydraulic fluid inside the reservoir tank is low so as to be equal to or less than the fluid level required for warning indication, the float moves down, and the magnet moves closer to the reed switch and switches ON (closes) the reed switch with its magnetic force. Thus, warning indication is performed.

Incidentally, in both of the fluid quantity sensors of the reservoir tanks described in JP-T-2006-519728 and JP-A-2004-74837, the reed switch is housed in a switch housing portion that is disposed integrally by the same member on the reservoir body. In this case, usually the reed switch is attached as a result of an elastic locking claw disposed on a case of the reed switch elastically locking in a locking hole in the switch housing portion.

In both of these fluid quantity sensors, the switch housing portion is disposed exposed to the outside. For this reason, there is the fear that the switch housing portion will contact another member when the reservoir tank is transported, when the reservoir tank is attached to the master cylinder, or when the master cylinder to which the reservoir tank has been attached is attached to the vehicle body. Thus, it is conceivable for a fluid quantity sensor protecting portion that is a cover portion to be disposed in the reservoir body by integral molding so as to cover the switch housing portion.

The reservoir tank is formed as a result of plural single bodies that have been plastic-molded being welded together in a liquid-tight manner by heat and pressure. At this time, in the plastic molding step and the welding step, sometimes the aforementioned locking hole is not formed in these steps but is processed and formed by after-processing after the welding step.

However, when the switch housing portion is covered and protected by a cover portion as described above, this cover portion becomes an obstacle, so there is the problem that processing of the locking hole by after-processing is difficult. Further, the same is also true when another cover portion other than the fluid quantity sensor protecting portion is integrally disposed on the reservoir body as this cover portion.

### SUMMARY

The present invention has been made in light of this circumstance, and it is an object thereof to provide a reservoir tank, and a brake device using the reservoir tank, with which processing of an attaching and locking portion that attaches a switch can be easily and reliably performed even when a cover portion that covers a fluid quantity sensor is integrally disposed.

In order to address the problem described above, a reservoir tank of the present invention is a reservoir tank where a fluid quantity sensor is disposed on a reservoir body, the fluid quantity sensor being equipped at least with a switch that switches ON and OFF depending on the fluid level of hydraulic fluid stored inside the reservoir body and a switch housing portion that is disposed by integral molding on the reservoir body and has a switch attaching and locking portion to which the switch is attached, with the fluid quantity sensor being configured to detect the quantity of the hydraulic fluid stored inside the reservoir body, wherein a cover portion that covers the fluid quantity sensor is disposed by integral molding in the reservoir body on the switch housing portion, and a tool insertion portion that allows a tool for processing the switch attaching and locking portion to be inserted therethrough is disposed in the cover portion.

Further, the reservoir tank of the present invention may be configured such that the tool insertion portion is a tool insertion hole or a tool insertion groove.
Moreover, the reservoir tank of the present invention may be configured such that the fluid quantity sensor has a locking claw and the switch attaching and locking portion is a locking hole in which the locking claw becomes locked to attach the switch to the switch housing portion.
Moreover, the reservoir tank of the present invention may be configured such that the cover portion is a fluid quantity sensor protecting portion that protects the fluid quantity sensor.

Moreover, the reservoir tank of the present invention may be configured such that the reservoir tank is equipped with a hydraulic fluid supply opening, a hydraulic fluid supply portion to which the hydraulic fluid is supplied from this hydraulic fluid supply opening, a hydraulic fluid storage chamber that stores the hydraulic fluid as a result of the hydraulic fluid in this hydraulic fluid supply portion being supplied thereto via a hydraulic fluid passage, and a cylindrical portion that is disposed between the hydraulic fluid supply opening and the hydraulic fluid supply portion and has inside a chamber that is communicated with the hydraulic fluid supply portion, a volume-augmented chamber forming portion that has inside a volume-augmented chamber that is communicated with the chamber is disposed in the cylindrical portion, and at least part of the volume-augmented chamber is positioned above a MAX line that is a maximum storage level of the hydraulic fluid, and the cover portion is the volume-augmented chamber forming portion.

A brake device of the present invention comprises at least: a reservoir tank that stores hydraulic fluid; a master cylinder to which the hydraulic fluid inside the reservoir tank is supplied and which generates brake pressure when it is actuated; and a brake cylinder that is actuated by hydraulic pressure from the master cylinder, wherein the reservoir tank is any one of the reservoir tanks of the present invention described above.

According to the reservoir tank of the present invention configured in this manner, the tool insertion portion that allows the tool for processing the switch attaching and locking portion in the switch housing portion of the fluid quantity sensor to be inserted therethrough is disposed in the cover portion that covers the fluid quantity sensor, so even when the cover portion that covers the fluid quantity sensor is disposed, the tool insertion portion can be utilized to form the switch attaching and locking portion in the reservoir tank by after-processing after the molding process of the reservoir tank. In that case, the tool insertion portion can be formed simply in the cover portion by forming the tool insertion portion as a tool insertion hole or a tool insertion groove.

By using the cover portion as the fluid quantity sensor protecting portion that protects the fluid quantity sensor, the fluid quantity sensor can be protected by this fluid quantity sensor protecting portion.
Further, by disposing at least part of the volume-augmented chamber inside the volume-augmented chamber forming portion such that it is positioned above the MAX line that is the maximum storage level of the hydraulic fluid and by using the cover portion as this volume-augmented chamber forming portion, an increase change in the volume of the hydraulic fluid can be more reliably absorbed, a situation where the hydraulic fluid leaks out to the outside from the hydraulic fluid supply opening can be suppressed, and the fluid quantity sensor can be protected by the volume-augmented chamber forming portion that is the fluid quantity sensor protecting portion.

According to the brake device of the present invention, the brake device is equipped with the reservoir tank of the present invention, so the switch can be reliably and simply attached because the tool insertion portion can be utilized to form the switch attaching and locking portion in the reservoir tank by after-processing after the molding process of the reservoir tank. Thus, the fluid quantity of the hydraulic fluid inside the reservoir tank can be more accurately detected, and the brake can be more reliably actuated.

### BRIEF DESCRIPTION OF THE DRAWINGS

FIG. 1 is a view schematically showing a brake device equipped with a first example of a mode of implementing a reservoir tank pertaining to the present invention;
FIG. 2A and FIG. 2B show the first example of the mode of implementing the reservoir tank pertaining to the present invention, with FIG. 2A being a front view and FIG. 2B being a plan view;
FIG. 3A is a partial cross-sectional view along line IIIA-IIIA in FIG. 2B, FIG. 3B is a partial cross-sectional view along line IIIB-IIIB in FIG. 3A, FIG. 3C is a partial view seen from the direction of arrow IIIC in FIG. 3A, and FIG. 3D is a partial cross-sectional view along line IIID-IIID in FIG. 2B;
FIG. 4A and FIG. 4B show a second example of a mode of implementing the reservoir tank pertaining to the present invention, with FIG. 4A being a front view and FIG. 4B being a plan view;
FIG. 5A and FIG. 5B show a third example of a mode of implementing the reservoir tank pertaining to the present invention, with FIG. 5A being a front view and FIG. 5B being a plan view;
FIG. 6A is a partial cross-sectional view along line VIA-VIA in FIG. 5A, FIG. 6B is a partial view seen from the direction of arrow VIB in FIG. 6A, and FIG. 6C is a partial cross-sectional view along line VIC-VIC in FIG. 5A; and
FIG. 7A, FIG. 7B, FIG. 7C and FIG. 7D show a fourth example of a mode of implementing the reservoir tank pertaining to the present invention, with FIG. 7A being a front view, FIG. 7B being the same cross-sectional view as FIG. 3A along a vehicle front-rear direction, FIG. 7C being a partial view seen from the direction of arrow VIIC in FIG. 7A, and FIG. 7D being a partial cross-sectional view along line VIID-VIID in FIG. 7A.

### DETAILED DESCRIPTION

Modes for implementing the present invention will be described below using the drawings. In the description below, horizontal and vertical refer to a state where a reservoir tank is installed in a horizontal or substantially horizontal vehicle, and a maximum storage level (MAX line) and a minimum storage level (MIN line) of hydraulic fluid are horizontal lines in the same state of the reservoir tank.

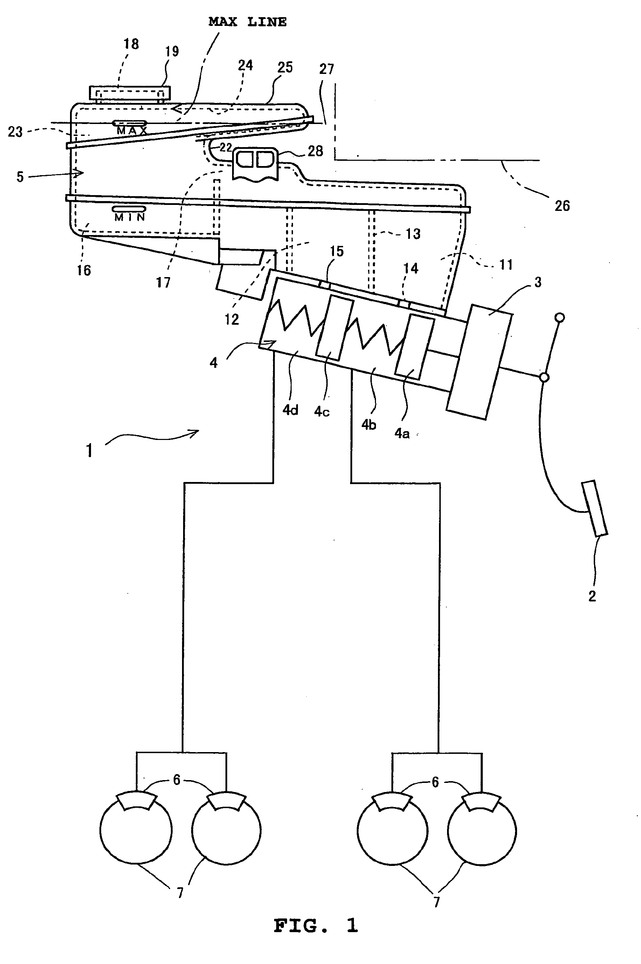

FIG. 1 is a view schematically showing a brake device equipped with a first example of a mode of implementing a reservoir tank pertaining to the present invention.
As shown in FIG. 1, a hydraulic brake device 1 of this first example is basically the same as a conventionally known common dual-system hydraulic brake device. That is, the hydraulic brake device 1 is equipped with a brake pedal 2, a booster 3, a tandem master cylinder 4, a reservoir tank 5 and brake cylinders 6.

When a driver steps on the brake pedal 2, the booster 3 is actuated to boost, by a predetermined servo ratio, and output the pedal force. Because of the output of this booster 3, a primary piston 4a of the tandem master cylinder 4 is actuated to feed the hydraulic fluid in a primary fluid chamber 4b to the brake cylinders 6 of one system and a secondary piston 4c is actuated to feed the hydraulic fluid in a secondary fluid chamber 4d to the brake cylinders 6 of the other system. When the loss stroke of each brake system disappears, the tandem master cylinder 4 generates hydraulic pressure. The hydraulic pressure of the tandem master cylinder 4 is transmitted to each of the brake cylinders 6, each of the brake cylinders 6 generates brake force, and a brake acts on each wheel 7.

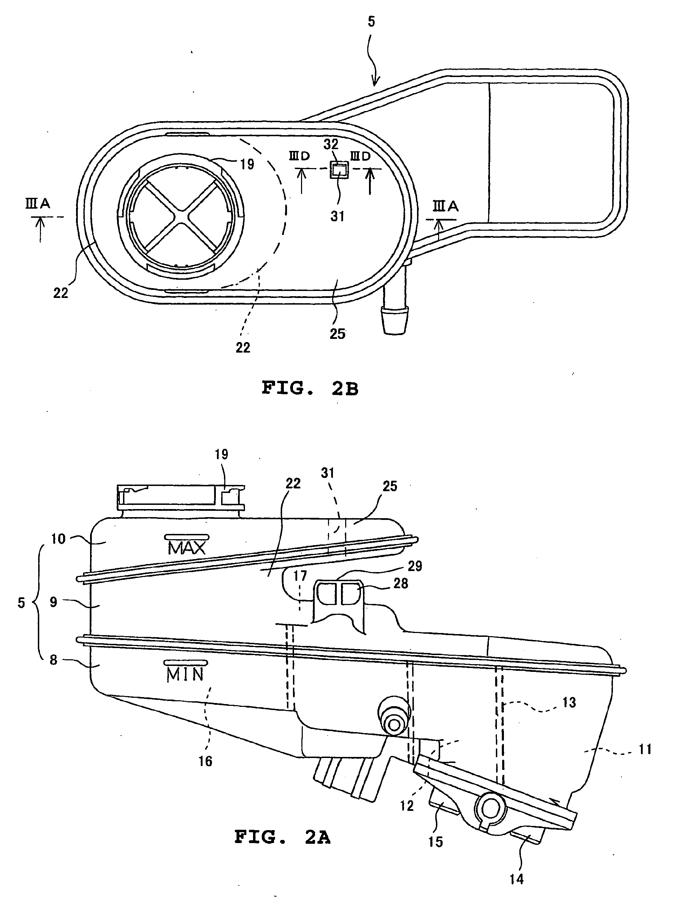

Incidentally, the reservoir tank 5 used in the brake device 1 of this first example has, as shown in FIG. 2A and FIG. 2B, a reservoir body comprising three bodies: a lower body 8; a middle body 9 that is welded in a liquid-tight manner along a horizontal plane or a substantially horizontal plane by heat and pressure to the open portion of the upper end of this lower body 8; and an upper body 10 that is similarly welded in a liquid-tight manner along a horizontal or a substantially horizontal plane by heat and pressure to the open portion of the upper end of this middle body 9. In the reservoir tank 5 of this first example, in a state where the tandem master cylinder 4 to which the reservoir tank 5 is attached is attached to the vehicle body and in a state where the vehicle body is horizontal, a minimum storage level (MIN line) of the hydraulic fluid is set in the lower body 8 and, similarly, a maximum storage level (MAX line) of the hydraulic fluid is set in the upper body 10.

In the right side portion of the lower body 8 in FIG. 2A and FIG. 2B, there are disposed a primary hydraulic fluid storage chamber 11 and a secondary hydraulic fluid storage chamber 12. The primary hydraulic fluid storage chamber 11 and the secondary hydraulic fluid storage chamber 12 are partitioned by a partition wall 13. However, the tops of the hydraulic fluid storage chambers 11 and 12 are open, and in a state where the middle body 9 has been welded to the lower body 8, the primary hydraulic fluid storage chamber 11 and the secondary hydraulic fluid storage chamber 12 are always communicated with each other through a gap between the upper end of the partition wall 13 and the lower surface of the upper wall of the middle body 9. As shown in FIG. 2A, in the bottom of the primary hydraulic fluid storage chamber 11, there is disposed a hydraulic fluid feed opening 14 that supplies the hydraulic fluid to the primary fluid chamber 4b of the tandem master cylinder 4, and in the bottom of the secondary hydraulic fluid storage chamber 12, there is disposed a hydraulic fluid feed opening 15 that supplies the hydraulic fluid to the secondary fluid chamber 4d of the tandem master cylinder 4.

In the left side portion of the reservoir tank 5 in FIG. 2A, as shown in FIG. 1, FIG. 2A and FIG. 3A, there is disposed a hydraulic fluid supply portion 16. The hydraulic fluid supply portion 16 is defined by the lower body 8 and the middle body 9, and this hydraulic fluid supply portion 16 is always communicated with the primary hydraulic fluid storage chamber 11 and the secondary hydraulic fluid storage chamber 12 by a hydraulic fluid passage 17. This hydraulic fluid passage 17 is disposed in the left-right direction center portion of the reservoir tank 5 in FIG. 2A and is formed by the lower body 8 and the middle body 9.

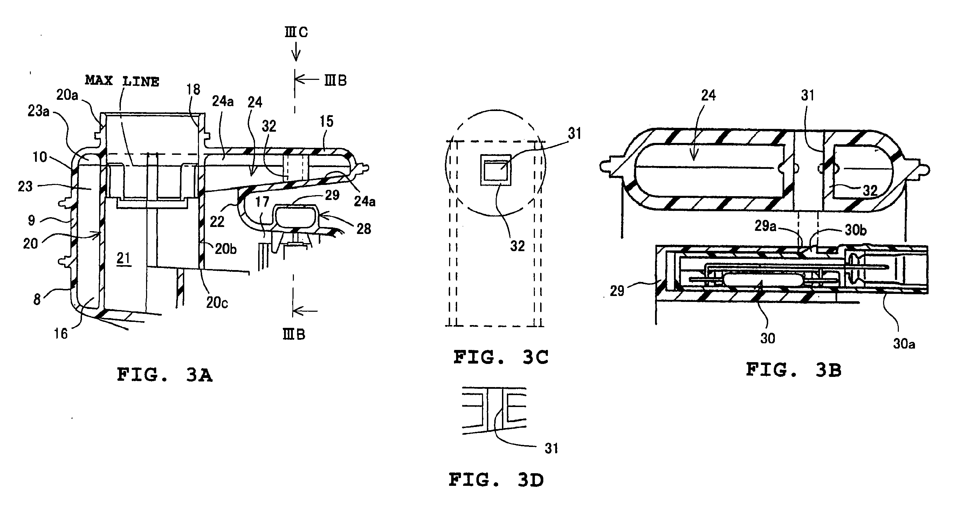

As shown in FIG. 3A, in the upper body 10, there is disposed a hydraulic fluid supply opening 18 for supplying the hydraulic fluid to the inside of the reservoir tank 5. As shown in FIG. 2A and FIG. 2B, in the hydraulic fluid supply opening 18, there are disposed a cap 19 that opens and closes this hydraulic fluid supply opening 18 and a conventionally known cap seal (not shown). The hydraulic fluid supply opening 18 is placed above the hydraulic fluid supply portion 16 of the reservoir tank 5. The hydraulic fluid supply opening 18 and the hydraulic fluid supply portion 16 are communicated with each other through a hydraulic fluid supply passage 21 that is formed by a circular cylinder-shaped member 20. In that case, the circular cylinder-shaped member 20 comprises an outside circular cylinder-shaped portion 20a that projects outside the reservoir tank 5 and an inside circular cylinder-shaped portion 20b that projects inside the reservoir tank 5. Consequently, the hydraulic fluid supply opening 18 is disposed in the open end of the outside circular cylinder-shaped portion 20a, and the hydraulic fluid supply passage 21 is formed through the outside circular cylinder-shaped portion 20a and the reservoir tank 5. Additionally, the hydraulic fluid supply portion 16 is disposed around the outer periphery of the circular cylinder-shaped member 20. Additionally, an opening 20c is disposed in the lower half portion of the inside circular cylinder-shaped portion 20b, and the hydraulic fluid supply passage 21 and the hydraulic fluid supply portion 16 are always communicated with each other through this opening 20c. In this manner, in a state where the reservoir tank 5 has been installed in a vehicle, the hydraulic fluid supply opening 18 and the hydraulic fluid supply portion 16 are positioned on the vehicle front side of the primary hydraulic fluid storage chamber 11 and the secondary hydraulic fluid storage chamber 12.

Further, the distances in the vertical direction from the hydraulic fluid supply opening 18 of the reservoir tank 5 of this first example to the MIN line and to the MAX line are set to be the same as those in a conventional reservoir tank installed in a vehicle in which this reservoir tank 5 is installed.

As shown in FIG. 3A, the upper portion of the middle body 9 and the upper body 10 are positioned below the hydraulic fluid supply opening 18 and are configured to be an oblong cylinder-shaped portion 22 (which corresponds to a cylindrical portion of the present invention). Consequently, the oblong cylinder-shaped portion 22 is disposed between the hydraulic fluid supply opening 18 and the hydraulic fluid supply portion 16. Further, between the inner peripheral surface of the oblong cylinder-shaped portion 22 and the outer peripheral surface of the upper half portion of the inside circular cylinder-shaped portion 20b, there is disposed an annular chamber 23 that is positioned above the hydraulic fluid supply portion 16 and is always communicated with this hydraulic fluid supply portion 16. Additionally, on the upper end portion of the oblong cylinder-shaped portion 22, there is disposed a volume-augmented chamber forming portion 25 having inside a volume-augmented chamber 24 that is always communicated with the chamber 23. As shown in FIG. 1, this volume-augmented chamber forming portion 25 is disposed so as to extend horizontally or substantially horizontally from the oblong cylinder-shaped portion 22 into a dead space 27-that is, in this first example, a space above the hydraulic fluid passage 17 of the middle body 9-where it does not interfere with another part (e.g., a dashboard) 26 when the reservoir tank 5 has been installed in a vehicle.

The inside circular cylinder-shaped portion 20b of the circular cylinder-shaped member 20 is not invariably necessary and can also be omitted. When the inside circular cylinder-shaped portion 20b is omitted, the configural portions of the hydraulic fluid supply opening 18, the oblong cylinder-shaped portion 22 and the hydraulic fluid supply portion 16 come to have almost the same configurations as those of the reservoir tank described in JP-T-2006-519728 described above. Further, in this case, the cross section of the chamber 23 is no longer annular but comes to have the shape of the inner peripheral surface of the oblong cylinder-shaped portion 22.

The volume-augmented chamber 24 is disposed so as to be positioned across the top and bottom of the MAX line. That is, in the state shown in FIG. 3A where the hydraulic fluid fills the reservoir tank 5 to the MAX line, the hydraulic fluid enters the inside of the volume-augmented chamber 24 and an air chamber 24a is formed above the fluid level of the hydraulic fluid inside the volume-augmented chamber 24. At this time, an air chamber 23a is also formed above the fluid level of the hydraulic fluid inside the chamber 23 of the oblong cylinder-shaped portion 22 like in a conventional reservoir tank including the reservoir tank described in JP-T-2006-519728 described above. Additionally, the air chamber 24a inside the volume-augmented chamber 24 is communicated with the same air chamber 23a as conventionally.

Moreover, a bottom portion 24b of the volume-augmented chamber 24 slants so as to become a downward slope toward the chamber 23. Thus, it is made easy for the hydraulic fluid entering the inside of the volume-augmented chamber 24 to flow toward the hydraulic fluid supply portion 16 when the fluid level of the hydraulic fluid supply portion 16 drops.

As shown in FIG. 3A, on the upper surface of the middle body 9 below the volume-augmented chamber forming portion 25, there is disposed a fluid quantity sensor 28 that detects the hydraulic fluid quantity inside the reservoir tank 5. As shown in FIG. 3B, the fluid quantity sensor 28 has a bottomed, substantially square cylinder-shaped switch housing portion 29 that is integrally molded with the middle body 9 and a normally-closed reed switch 30 that is housed in this switch housing portion 29. When the fluid level of the hydraulic fluid inside the reservoir tank 5 is higher than a fluid level required for warning indication by a fluid quantity notification lamp (slightly higher than MIN), this reed switch 30 is switched ON by a magnet disposed on a float that moves up and down depending on the fluid level of the hydraulic fluid. Thus, the fluid quantity notification lamp does not light up and warning indication is not performed. Further, when the fluid level of the hydraulic fluid becomes equal to or less than the fluid level required for warning indication, the magnet falls together with the float and the reed switch 30 switches OFF. Thus, the fluid quantity notification lamp lights up and warning indication is performed.

Incidentally, the reed switch 30 is attached as a result of an elastic locking claw 30b disposed on a case 30a of the reed switch 30 elastically locking in a locking hole 29a (which corresponds to a switch attaching and locking portion of the present invention) of the switch housing portion 29. As described above, the reservoir tank 5 is formed as a result of the lower body 8, the middle body 9 and the upper body 10 that have been plastic-molded being welded together by heat and pressure. At this time, in the plastic molding step and the welding step, sometimes the locking hole 29a is not formed in these steps but is processed and formed by after-processing after the welding step.

However, in this case, the locking hole 29a is disposed directly below the volume-augmented chamber forming portion 25. That is, the volume-augmented chamber forming portion 25 disposed integrally in the middle body 9 and the upper body 10 is a cover portion that covers the switch housing portion 29 that is disposed integrally on the middle body 9. This volume-augmented chamber forming portion 25 becomes an obstacle, so it is difficult to process and form this locking hole 29a in the switch housing portion 29 by after-processing.

Thus, as shown in FIG 2A and FIG. 3B to FIG. 3D, in the reservoir tank 5 of this first example, a tool insertion hole 31 that serves as a tool insertion portion that allows a tool for disposing the locking hole 29a in the switch housing portion 20 to be inserted therethrough is formed in the volume-augmented chamber forming portion 25 so as to penetrate the volume-augmented chamber forming portion 25 from its upper surface to its lower surface in the vertical direction and so as to face the formation position of the locking hole 29a. This tool insertion hole 31 is formed in a cross-sectionally square shape by a cross-sectionally square-shaped square cylinder-shaped member 32 and is blocked in a liquid-tight manner from the volume-augmented chamber 24. The tool insertion hole 31 can also be formed in another arbitrary shape such as another cross-sectionally substantially polygonal shape including a cross-sectionally substantially circular shape, a cross-sectionally substantially oblong shape, a cross-sectionally substantially elliptical shape, or a cross-sectionally triangular shape.

According to the reservoir tank 5 of this first example configured in this manner, the tool insertion hole 31 that serves as a tool insertion portion is formed in the volume-augmented chamber forming portion 25 so as to penetrate the volume-augmented chamber forming portion 25 from its upper surface to its lower surface in the vertical direction and so as to face the formation position of the locking hole 29a that locks the elastic locking claw 30b of the reed switch 30, so when the locking hole 29a is not formed and the formation position of the locking hole 29a is covered by the volume-augmented chamber forming portion 25 during the molding process of the reservoir tank 5, the tool insertion hole 31 can be utilized to form the locking hole 29a in the reservoir tank 5 by after-processing after the molding process of the reservoir tank 5.

Further, the volume-augmented chamber 24 is disposed so as to extend horizontally or substantially horizontally from the oblong cylinder-shaped portion 22 between the hydraulic fluid supply opening 18 and the hydraulic fluid supply portion 16 and so as to be positioned across the top and bottom of the MAX line, so in a state where the hydraulic fluid fills the reservoir tank 5 to the MAX line, the new air chamber 24a can be formed above the fluid level of the hydraulic fluid inside the volume-augmented chamber 24 in addition to the conventional air chamber 23a formed above the fluid level of the hydraulic fluid inside the oblong cylinder-shaped portion 22. Thus, when the temperature of the hydraulic fluid rises and the volume of the hydraulic fluid increases because of the use environment described above, this increased volume change in the hydraulic fluid can be absorbed by the conventional air chamber 23a and can also be absorbed by the new air chamber 24a. Consequently, even when the increase change in the volume of the hydraulic fluid is relatively large, the increase change in the volume of the hydraulic fluid can be more reliably absorbed, and a situation where the hydraulic fluid leaks out to the outside from the hydraulic fluid supply opening 18 and the cap 19 can be suppressed.

Moreover, the volume-augmented chamber forming portion 25 is disposed so as to extend horizontally or substantially horizontally from the oblong cylinder-shaped portion 22 between the hydraulic fluid supply opening 18 and the hydraulic fluid supply portion 16, so even when the volume-augmented chamber forming portion 25 is disposed, the distance between the hydraulic fluid supply opening 18 and the MAX line can be set to be the same as in a conventional reservoir. Thus, as a pressure-feed filling device instrument that fills the inside of the reservoir tank 5 with the hydraulic fluid, a conventional pressure-feed filling device instrument can be used as is, so that the pressure-feed filling device instrument does not have to be changed. Consequently, the number of types of pressure-feed filling device instruments does not increase by that amount, so when the vehicle production line is a line that continuously produces different vehicle types, various types of pressure-feed filling device instruments do not have to be prepared for the production line even when the reservoir tank 5 having the volume-augmented chamber forming portion 25 is used. As a result, the work of filling the reservoir tank 5 with the hydraulic fluid becomes simple and instrument misuse can be suppressed.

Moreover, the volume-augmented chamber forming portion 25 is disposed so as to extend above the hydraulic fluid passage 17 in the space that becomes dead space when the reservoir tank 5 is installed in a vehicle, so the entire reservoir tank 5 can be formed in substantially the same size as that of a conventional reservoir tank even when the volume-augmented chamber forming portion 25 is disposed, and an increase in the size of the reservoir tank 5 can be suppressed. Consequently, the reservoir tank 5 can be efficiently installed in the limited space of a relatively narrow engine room without interfering with other parts.

Moreover, the bottom portion 24b of the volume-augmented chamber 24 slants so as to become a downward slope toward the chamber 23 inside the oblong cylinder-shaped portion 22, so it becomes possible to more reliably cause the hydraulic fluid entering the inside of the volume-augmented chamber 24 to flow toward the chamber 23-that is, the hydraulic fluid supply portion 16-when the quantity of the hydraulic fluid inside the reservoir tank 5 decreases.

Moreover, the switch housing portion 29 is covered by the volume-augmented chamber forming portion 25, so the switch housing portion 29-that is, the fluid quantity sensor 28-can be protected by this volume-augmented chamber forming portion 25.

According to the hydraulic brake device 1 equipped with the reservoir tank 5 of this first example, because the tool insertion hole 31 can be utilized to form the locking hole 29a in the reservoir tank 5 by after-processing after the molding process of the reservoir tank 5 as described above, the reed switch 30 can be reliably and simply attached, so the fluid quantity of the brake fluid inside the reservoir tank 5 can be more accurately detected and the brake can be more reliably actuated.

Further, according to the hydraulic brake device 1 of this example, even in a vehicle where the temperature of the engine room becomes relatively high, by using the reservoir tank 5 of this first example in the hydraulic brake device 1, leakage of the brake fluid that is the hydraulic fluid from the hydraulic fluid supply opening 18 capped by the cap 19 can be suppressed so that the brakes can be more reliably actuated, and contamination inside the engine room can be prevented.

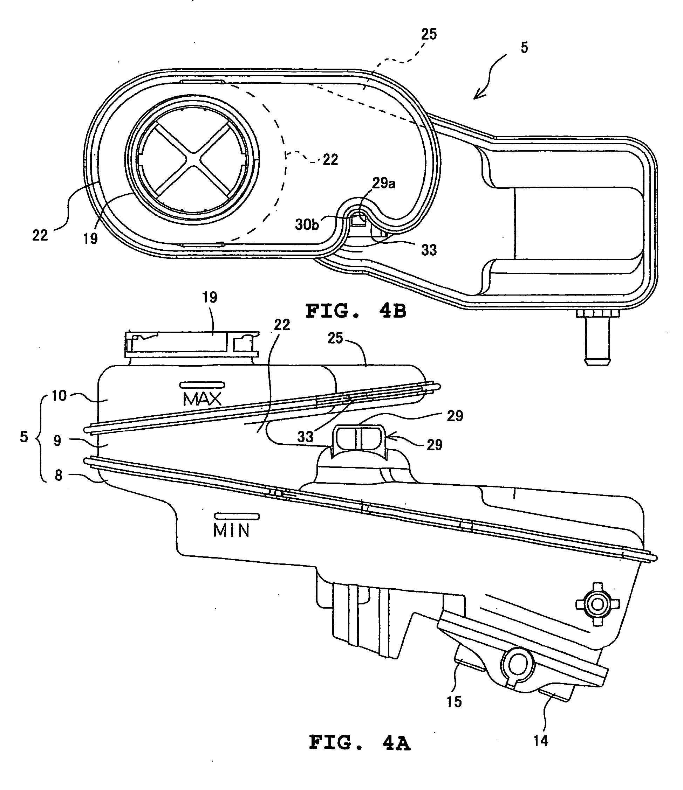

FIG. 4A and FIG. 4B show a second example of a mode of implementing the reservoir tank pertaining to the present invention, with FIG. 4A being a front view and FIG. 4B being a plan view.
In the first example described above, the tool insertion hole 31 that is a hole is used as the tool insertion portion in the volume-augmented chamber forming portion 25, but as shown in FIG. 4A and FIG. 4B, in the reservoir tank 5 of this second example, a tool insertion groove 33 that is a groove is used as the tool insertion portion. That is, in the reservoir tank 5 of the second example, the tool insertion groove 33 is, like the tool insertion hole 31 of the first example, formed in the volume-augmented chamber forming portion 25 so as to penetrate the volume-augmented chamber forming portion 25 in the vertical direction and so as to face the formation position of the locking hole 29a. This tool insertion groove 33 is formed in a substantial V shape where the width of the groove becomes larger toward the open side. The tool insertion groove 33 can also be formed in another arbitrary shape such as a substantial U shape or a trapezoidal shape.
The other configurations of the reservoir tank 5 of this second example are the same as those of the first example.

According to the reservoir tank 5 of the second example configured in this manner, the tool insertion groove 33 is used as the tool insertion portion, so the molding process of the reservoir tank 5 is easy in comparison to that of the reservoir tank 5 of the first example using the tool insertion hole 31. Further, by using a groove as the tool insertion portion, operation and handling of the tool during formation of the locking hole 29a become easy. In particular, by making the width of the groove larger toward the open side, operation and handling of the tool become even easier.
The other action and effects of the reservoir tank 5 of this second example are the same as those of the first example, and the configuration and the action and effects of the hydraulic brake device 1 using the reservoir tank 5 of the second example are also the same as those of the hydraulic brake device 1 using the reservoir tank 5 of the first example.

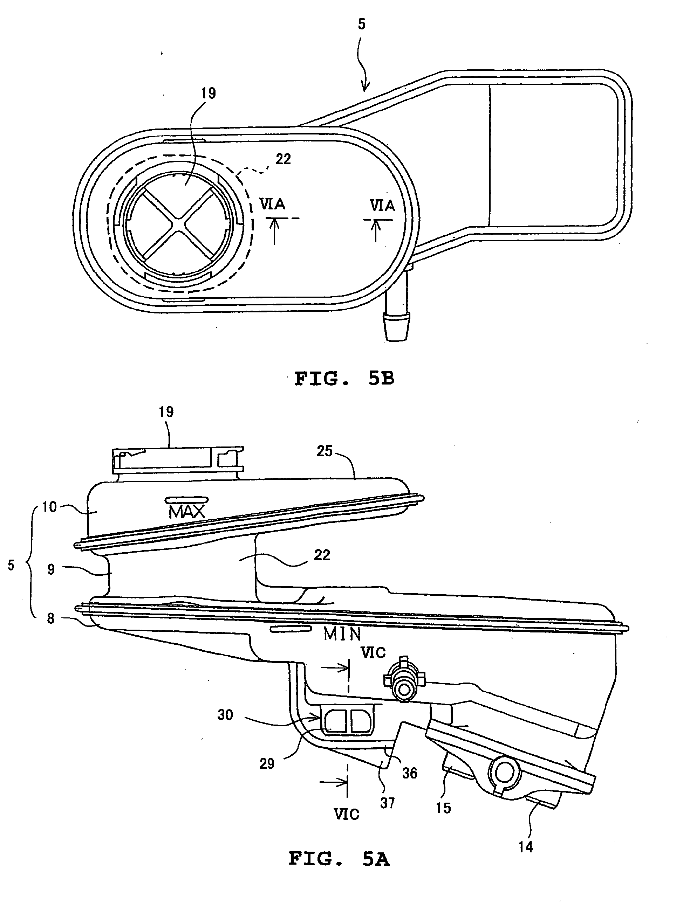

FIG. 5A and FIG. 5B show a third example of a mode of implementing the reservoir tank pertaining to the present invention, with FIG. 5A being a front view and FIG. 5B being a plan view.
In both the first example and the second example described above, the fluid quantity sensor 28 is disposed on the upper surface of the middle body 9, but as shown in FIG. 5A, in the reservoir tank 5 of this third example, the fluid quantity sensor 28 is disposed on the lower surface of the lower body 8. This fluid quantity sensor 28 has a substantially square cylinder-shaped switch housing portion 29 in which an inner hole integrally molded in the lower body 8 opens at both ends thereof and a reed switch 30 that is housed in this switch housing portion 29.

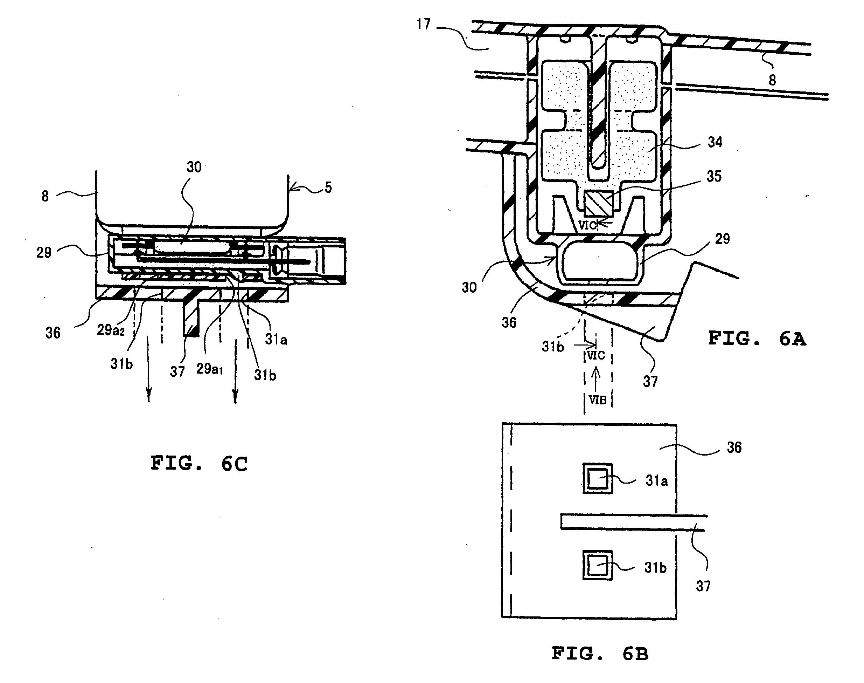

In that case, the fluid quantity sensor 28 is disposed more in the vehicle front direction than the two hydraulic fluid feed openings 14 and 15. Further, the reed switch 30 is a normally open reed switch. Additionally, when the fluid level of the hydraulic fluid inside the reservoir tank 5 is higher than the fluid level required for warning indication by the fluid quantity notification lamp, a magnet 35 of a float 34 shown in FIG. 6A rises, whereby the reed switch 30 is switched OFF. Thus, the fluid quantity notification lamp turns off and warning indication is not performed. Further, when the fluid level of the hydraulic fluid is equal to or less than the fluid level required for warning indication by the fluid quantity notification lamp, the magnet 35 of the float 34 falls, whereby the reed switch 30 is switched ON. Thus, the fluid quantity notification lamp lights up and warning indication is performed.

Further, because the inner hole in the switch housing portion 29 is open at both ends, the reed switch 30 is selectively insertable from either side into the inner hole in the switch housing portion 29. For that reason, in the reservoir tank 5 of the third example, as shown in FIG. 6C, two locking holes 29a₁ and 29a₂ are disposed as the locking hole 29a. In the example shown in FIG. 6C, the reed switch 30 is inserted from the right side into the inner hole in the switch housing portion 29, and the locking claw 30a of the reed switch 30 is locked in the one locking hole 29a₁ and is attached to the switch housing portion 29. Further, the reed switch 30 can also be inserted from the left side into the inner hole in the switch housing portion 29 and the locking claw 30a of the reed switch 30 can be caused to lock in the other locking hole 29a₂. As for these attachments of the reed switch 30, it suffices to select either attachment method depending on the position where a controller is disposed.

Moreover, in the reservoir tank 5 of this third example, as shown in FIG. 5A and FIG. 6A, a fluid quantity sensor protecting portion 36 is disposed below the switch housing portion 29 so as to cover this switch housing portion 29. In that case, the fluid quantity sensor protecting portion 36 is integrally molded and disposed on the lower body 8. The fluid quantity sensor 28 is protected by this fluid quantity sensor protecting portion 36.

Additionally, two tool insertion holes 31a and 31b are disposed in the fluid quantity sensor protecting portion 36 so as to penetrate the fluid quantity sensor protecting portion 36 in the vertical direction and so as to face the corresponding locking holes 29a₁ and 29a₂. In that case, the fluid quantity sensor protecting portion 36 does not have a chamber, so the square cylinder-shaped member 32 such as in the first example that forms the locking holes 29a₁ and 29a₂ is not disposed. In FIG. 5A and FIG. 6A to FIG. 6C, 37 is a rib-like support portion that is supported on the master cylinder 4.

The other configurations and the other action and effects of the reservoir tank 5 of this third example are substantially the same as those of the first example, and the configurations and the action and effects of the hydraulic brake device 1 using the reservoir tank 5 of the third example are also the same as those of the hydraulic brake device 1 using the reservoir tank 5 of the first example.

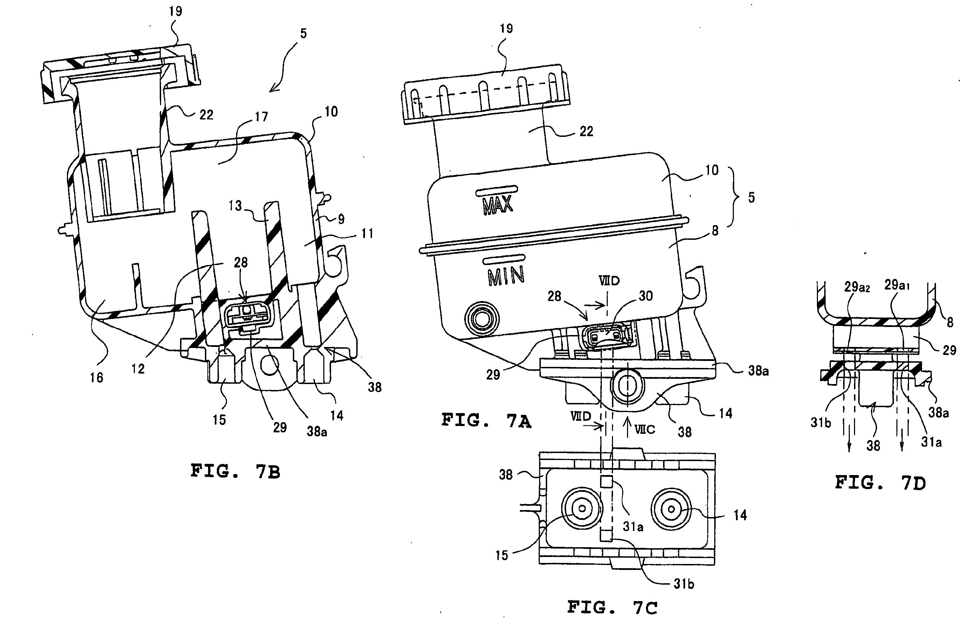

FIG. 7A, FIG. 7B, FIG. 7C and FIG. 7D show a fourth example of a mode of implementing the reservoir tank pertaining to the present invention, with FIG. 7A being a front view, FIG. 7B being the same cross-sectional view as FIG. 3A along the vehicle front-rear direction, FIG. 7C being a partial view seen from the direction of arrow VIIC in FIG. 7A, and FIG. 7D being a partial cross-sectional view (the reed switch is not shown) along line VIID-VIID in FIG. 7A.

In the third example described above, the reservoir body is configured from the three bodies of the lower body 8, the middle body 9 and the upper body 10, but as shown in FIG. 7A and FIG. 7B, in the reservoir tank 5 of this fourth example, the middle body 9 is not disposed so that the reservoir body is configured from the two bodies of the lower body 8 and the upper body 10. Additionally, the lower body 8 and the upper body 10 are welded together in the same manner as in each of the examples described above.

Further, in the third example, the fluid quantity sensor 28 is disposed more in the vehicle front direction than the two hydraulic fluid feed openings 14 and 15, but in the reservoir tank 5 of the fourth example, the fluid quantity sensor 28 is disposed between the two hydraulic fluid feed openings 14 and 15 on the lower surface of the lower body 8. Additionally, this fluid quantity sensor 28 is covered by a flange 38a of a master cylinder attaching portion 38 that is positioned below the fluid quantity sensor 28 and attaches the reservoir tank 5 to the master cylinder 4. Consequently, the fluid quantity sensor 28 is protected by this flange 38a, and the flange 38a has the same switch protecting function as that of the fluid quantity sensor protecting portion 36 of the third example.

Additionally, as shown in FIG. 7C and FIG. 7D, the same locking holes 29a₁ and 29a₂ as those in the third example are disposed in the same manner as in the third example in this flange 38a.
The other configurations and the other action and effects of the reservoir tank 5 of this fourth example are substantially the same as those of the first example and the third example, and the configurations and the action and effects of the hydraulic brake device 1 using the reservoir tank 5 of the fourth example are also the same as those of the hydraulic brake device 1 using the reservoir tank 5 of the first example.
The present invention is not limited to each of the examples described above, and various design changes are possible within the scope of the items set forth in the claims.

The reservoir tank pertaining to the present invention can be suitably utilized for a reservoir tank that stores hydraulic fluid and is used in a hydraulic pressure-actuated device such as a hydraulic brake device that utilizes hydraulic pressure such as oil pressure.
Further, the brake device pertaining to the present invention can be suitably utilized for a hydraulic brake device that uses the hydraulic fluid stored in the reservoir tank to apply a brake to a wheel.

## Claims

1. A reservoir tank where a fluid quantity sensor is disposed on a reservoir body, the fluid quantity sensor being equipped at least with a switch that switches ON and OFF depending on the fluid level of hydraulic fluid stored inside the reservoir body and a switch housing portion that is disposed by integral molding on the reservoir body and has a switch attaching and locking portion to which the switch is attached, with the fluid quantity sensor being configured to detect the quantity of the hydraulic fluid stored inside the reservoir body,
wherein
a cover portion that covers the fluid quantity sensor is disposed by integral molding in the reservoir body on the switch housing portion, and
a tool insertion portion that allows a tool for processing the switch attaching and locking portion to be inserted therethrough is disposed in the cover portion.

2. The reservoir tank according to claim 1, wherein the tool insertion portion is a tool insertion hole or a tool insertion groove.

3. The reservoir tank according to claim 1, wherein
the fluid quantity sensor has a locking claw, and
the switch attaching and locking portion is a locking hole in which the locking claw becomes locked to attach the switch to the switch housing portion.

4. The reservoir tank according to claim 1, wherein the cover portion is a fluid quantity sensor protecting portion that protects the fluid quantity sensor.

5. The reservoir tank according to claim 1, wherein
the reservoir tank is equipped with a hydraulic fluid supply opening, a hydraulic fluid supply portion to which the hydraulic fluid is supplied from this hydraulic fluid supply opening, a hydraulic fluid storage chamber that stores the hydraulic fluid as a result of the hydraulic fluid in this hydraulic fluid supply portion being supplied thereto via a hydraulic fluid passage, and a cylindrical portion that is disposed between the hydraulic fluid supply opening and the hydraulic fluid supply portion and has inside a chamber that is communicated with the hydraulic fluid supply portion,
a volume-augmented chamber forming portion that has inside a volume-augmented chamber that is communicated with the chamber is disposed in the cylindrical portion, and at least part of the volume-augmented chamber is positioned above a MAX line that is a maximum storage level of the hydraulic fluid, and
the cover portion is the volume-augmented chamber forming portion.

6. A brake device comprising:
a reservoir tank that stores hydraulic fluid;
a master cylinder to which the hydraulic fluid inside the reservoir tank is supplied and which generates brake pressure when it is actuated; and
a brake cylinder that is actuated by hydraulic pressure from the master cylinder,
wherein the reservoir tank is the reservoir tank according to claim 1.
